# EUROPEAN PATENT SPECIFICATION

(11) **EP 0 943 562 B1**
(45) Date of publication and mention of the grant of the patent: **02.04.2003**
(21) Application number: 99100172.8
(22) Date of filing: 07.01.1999
(51) Int. Cl.: B65G 47/51, B65G 47/08

(54) **Machine for grouping in parallel rows of products arriving in a single line**
Maschine zum Gruppieren in parallelen Reihen von in Einzelreihen angeführten Produkten
Dispositif pour grouper des produits arrivant en une seule ligne en rangées parallèles

(30) Priority: 19.03.1998 EP 98830153
(43) Date of publication of application: 22.09.1999
(73) Proprietor: Fameccanica. Data S.p.A., 66020 Sambuceto di S. Giovanni, Teatino (Chieti) (IT)
(72) Inventor: Rommelli, Guido, 64034 Montefino (Teramo) (IT)
(74) Representative: Bosotti, Luciano

(56) References cited:
- EP-A- 0 292 378
- EP-A- 0 501 382
- DD-A- 133 215
- US-A- 3 710 536
- US-A- 4 902 184
- US-A- 5 125 496

## Description

The present invention relates to a device for handling articles of the type described, for example, in EP-B-0 292 378.

Such devices are currently employed in various sectors of technology, a case in point being the packaging of food products or hygienic and sanitary articles, and, more generally, in all situations in which a so-called object "buffer" has to be employed to absorb any temporary discrepancies between the flow rate of the arriving or incoming articles and the flow rate of the outgoing articles.

These discrepancies may derive (as they do in the example to which extensive reference will be made hereinafter) from the fact that the device receives as its input a practically continuous flow of articles, while the output therefrom operates on an on-off basis and therefore only in distinct intervals, for example when it discharges at a predetermined rhythm groups of articles that are arranged together with a view to some subsequent processing operation (for example, in a packaging station, possible after appropriate compaction).

In the solutions known to the state of the art, including the one described in the previously cited document, the length of the tract of the conveyor that forms the buffer (and in practice therefore also the number of articles that can be contained in the buffer) is made to vary by realizing an overall translation of the conveyor structure. The effect thereby obtained is that of varying the length of the active branch of the conveyor comprised between the loading station and the discharge station, these two stations being maintained in fixed positions. The principal critical aspects of the functioning of these known devices are essentially bound up with the objective difficulty of ensuring an exact phasing (cadencing) of the functioning of the device, this especially in relation to the incoming flow of articles and the need for moving the entire structure of the conveyor, with all the intrinsic problems of inertia and wear and tear necessarily associated with this action. These intrinsic limitations become more and more evident as the speed at which the device is expected to operate becomes greater. Another drawback associated with the solutions known to the state of the art derives from the difficulty that is experienced when so-called "format changes" have to be made, that is to say, when the device has to be adapted for processing different articles and/or realizing different assortment functions.

In a more specific manner the present invention relates to a device in accordance with the preamble of Claim 1 hereinbelow, known - for example - from EP-A-0 501 382.

The machine disclosed in such prior art document includes an actuation chain which is closed in a loop and is provided with a plurality of seats which perform a corresponding closed path, moving from a side for loading individual products to a side for unloading rows (R) of products. A swinging conveyor is arranged at the loading side and, in the row unloading pauses and during the movement thereof, moves in a stepwise manner and aligns with the individual seats in order to deposit therein the continuously fed products. The swinging conveyor and the chain are Kinematically coupled to each other by means of a pinion meshing with the chain.

Though coming to grips to a certain extent with some of the problems that have just been outlined, the said known device is intrinsically unsuitable for operating at high speeds and/or in situations in which each of the articles that are being handled is itself made up of a plurality of products. As regards the reference to high operating speeds and referring to the application example extensively described hereinafter (which is not, however, to be considered as in any way limiting the range of the invention), a device in accordance with the present invention can be used as a grouper intended to receive an input flow of, say, 1200-1500 units per minute of such articles as ladies' sanitary towels that have to be grouped and compacted into piles that are to be sent, for example, to a packaging machine, with each pile containing ten articles, so that the output flow rate will be 120-150 piles per minute.

The present invention seeks to eliminate the aforesaid drawbacks by eliminating the need for keeping the principal machine in phase with the grouping device and, at one and the same time, making it possible to obtain the previously mentioned high operating speeds without this having any negative effects on the life and reliability of the mechanical components of the device.

According to the present invention, this scope can be attained thanks to a device having the characteristics of claim 1.

The invention will now be described, though only as an example not to be considered as limitative in any manner or wise, by reference to the drawings attached hereto, where:
- Figure 1: shows a general perspective view of the device according to the invention,
- Figure 2: shows a plan view of the device of Figure 1,
- Figures 3 to 7: illustrate the operating cycle of the device according to the invention in a partial and intentionally schematic plan view, and
- Figures 8 and 9: illustrate an advantageous development of the invention referring to a possible application in which the articles to be handled are in actual fact each made up of a plurality of individual products.

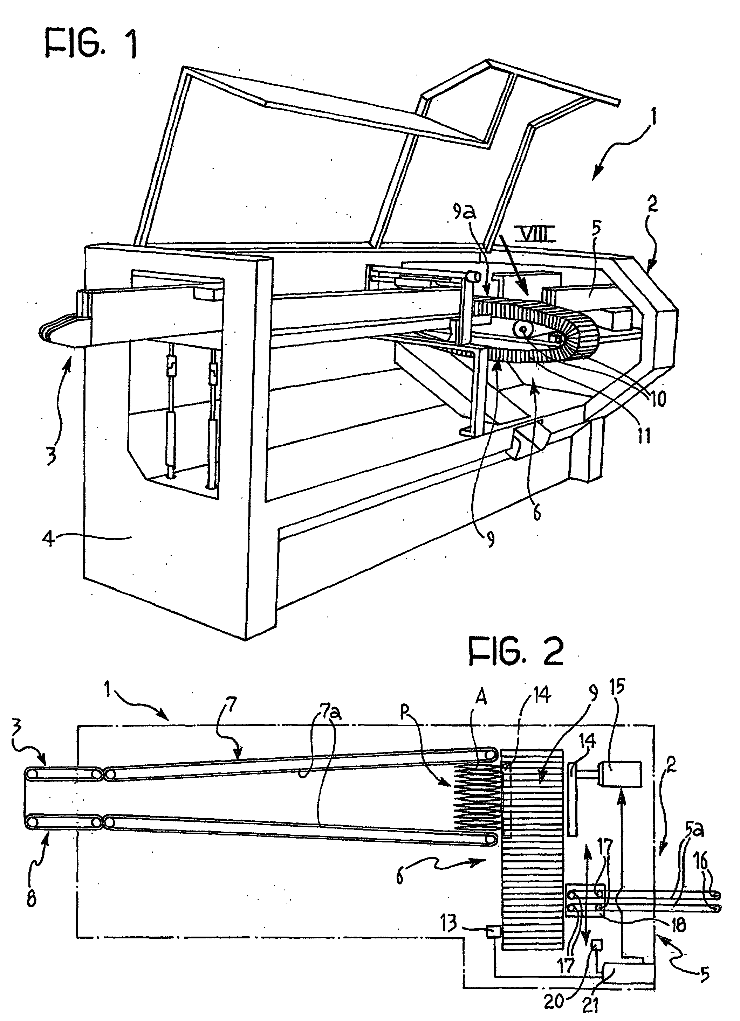

As already noted, the structure and the functioning of an implementation example of the invention will subsequently be illustrated (in relation to Figures 1 to 7) by reference to a device that is intended to act as a grouper of hygienic and sanitary articles, ladies' sanitary towels being a case in point. With the sole exception of a group of articles intended for compaction and illustrated in Figure 2, these articles A are not shown in Figures 1 and 2.

More specifically, the device 1 is intended to operate between an input end 2 and an output end 3 located, respectively, to the left and the right according to the direction from which Figures 1 and 2 are viewed. The terms "input" and "output" are of course referred to the flow direction of the articles A, which is here likewise supposed to take place from the right to the left in Figures 1 and 2.

In the implementation example here considered, the device 1 comprises a supporting structure 4 that consists of, for example, a solid bench realized in accordance with modern structural steelwork techniques. On the structure 4 there are mounted (in accordance with known criteria) motor-operated conveyors or groups of such conveyors, which may be of - for example - the belt or band type and constitute the input end 2 and the output and 3, as well as all the other organs situated between these two ends.

More specifically, the reference number 5 indicates a first conveyor (or input conveyor) consisting of a pair of belts or bands operated by means of motors (via motor organs of a known type not shown on the drawings) extending with their respective active branches 5a - vertically orientated and placed side by side - in such a way as to jointly define a gripping and dragging range for the incoming article flow. Henceforth in the present description it will be assumed that these articles are constituted by sanitary towels A for ladies that are fed towards the input end 2 of the device 1 in a continuous flow of articles that move forward one behind the other, typically arranged "edgewise and upright", that is to say, in such a way that their flat faces and shorter sides lie in a vertical plane and the longer sides of the face are parallel to the line of motion.

One may assume that such a flow of articles (at a rather high flow rate, which may be - for example - of the order of 1200-1500 articles per minute) to becoming sanitary towel production line (not shown) located to the right with respect to the device 1 when the arrangement is viewed as in Figures 1 and 2.

The incoming articles will therefore be inserted (in accordance with known criteria) in the space comprised between the two active branches 5a of the belts or bands of the conveyor 5 to be moved forward within the device 1 towards a grouping device that in its entirety is indicated by the reference number 6.

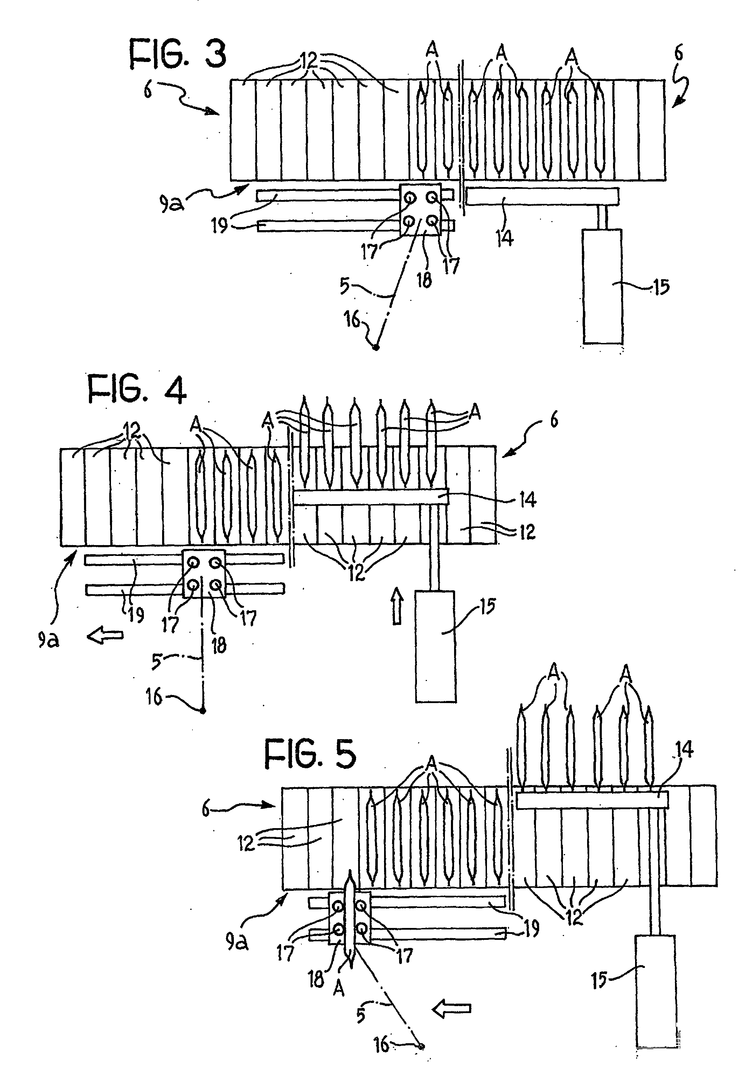

The unit 6, of which the structural characteristics and the operating mode will be described in greater detail further on, especially by reference to Figures 3 to 7, is designed to feed groups or piles of articles A placed side by side towards the output end 3 of the device 1. With a view to clarifying ideas, always in relation to articles A that of ladies' sanitary towels, one may suppose that the grouping unit 6 periodically feeds piles or groups P of articles A grouped together. In a practical application context such a pile may comprise, for example, ten articles A: for the sake of simplicity of illustration, however, it is assumed in Figures 3 to 7 that the piles in question are formed by grouping six articles.

Figures 1 and 2 show that the output end 3 of the device 1 consists - in the implementation example here considered - of a further conveyor or group of conveyors 7, 8 that - again in the example here considered - is or are structurally similar to the previously described conveyor 5.

In particular, the conveyor 7 , which receives the piles P of articles A arriving from the grouping unit 6, once again consists of two belts or bands that are operated by motors (via means of a known type that are not shown on the drawings) that present their respective active branches 7a with a vertical orientation and placed side by side in such a manner as to be capable of receiving within them the piles P and thus moving them from the grouping unit 6 towards the output end 3.

Further examination of Figure 2 shows that the two active branches 7a of the conveyor 7 are preferably not arranged parallel to each other. They are rather made to converge towards each other, thereby ensuring that as the article piles P are moved forward from the grouping unit 6 towards the output end 3 (constituted - in the implementation example here considered - by a further motor-operated belt or band conveyor 8 of a generally known type), they will also become subjected to a compacting action, this in the sense that the articles A in the pile P will become compressed in a direction perpendicular to the plane in which they are lying.

It is wholly obvious that this compaction operation constitutes a preferential but not imperative characteristic of the device according to the invention. The fact that the articles A in the piles P become subjected to a compacting action as they move towards the output end 3 is intended to facilitate the subsequent packaging of the articles A (which takes place in a packaging machine, not shown, but may be supposed to be situated to the left of the device 1 as viewed in Figures 1 and 2) by reducing the overall volume of the articles A. It will readily be appreciated that the articles A explicitly referred to hereinabove (ladies' sanitary towels) are characterized, especially on account of the presence of their respective absorptive cores, by a certain compressibility, though this may vary according to the particular properties of the article.

The grouping unit 6 comprises the conveyor 9 as its principal element, which in its turn consists of a flexible body that in the manner of a ring envelops the respective rollers or groups of return rollers that are jointly indicated by the reference number 10 in Figure 1.

The body in question is provided on its outside (with respect to the envelopment trajectory) with projecting baffles or fins 11 and successive pairs of adjacent fins or baffles define receptacles 12 intended to receive the articles A arriving from the input conveyor 5 for the purpose of their subsequent transfer to the conveyor 7.

In the implementation form preferred at this moment, the baffles or fins 11 are mounted and in any case provided on the conveyor 9 in such a way as to extend in the direction orthogonal to the direction of motion of the upper and lower branches of the conveyor 9 and therefore in a direction substantially parallel to the direction of motion of the articles A on the input conveyor 5 and the conveyor 7 that collects the piles P of articles A from the grouping unit 6.

The conveyor 9 consists preferably of an articulated structure that is to all intents and purposes similar to a chain of which the links are represented by the root parts of the baffles 11, which are articulated with respect to each other thanks to the presence of complementary hinge parts between them.

Examination of Figure 1 shows that the conveyor 9 is mounted on the structure 4 in such a way as to present an upper or active branch 9a intended to realize the transfer of the articles A introduced into the receptacles 12 from the conveyor 5 (input position) to the conveyor 7 (output position).

The motion of the transfer band 9 is realized by means of motors (of a known type) that are shown schematically, though in Figure 2 only, and indicated by the reference number 13.

Unlike what happens, for example, in the solution described in EP-A-0 292 378, where the article transfer conveyor is made in such a way as to be moved physically sideways with respect to the fixed input and output position of the articles A, the solution according to the invention is such that the conveyor 9 is mounted on the structure 4 in a fixed position, this in the sense that (obviously without prejudice to the possibility of realizing the necessary transfer of the products A by virtue of the forward motion of the active branch 9a ) the whole of the conveyor 9 is maintained in a fixed position with respect to the structure 4, the same being true also as regards the conveyor 7.

This arrangement makes it possible for a pusher device 14, which acts as an expulsion organ and can be likened to a kind of rake or wiper, to intervene simultaneously on a certain group of articles A contained in the beds 12 of the tract of the active branch 9a of the conveyor 9 at that particular moment facing the input end of the conveyor 7. The pusher can thus expel from the transfer conveyor 9 (see the two positions of the pusher element 14 shown in Figure 2 and represented, respectively, by full and broken lines) a group of articles A that are intended to form a pile P. In particular, the articles A in question are expelled by causing them to leave their respective beds 12 and to move into the input end of the conveyor 7 placed back to back, thus realizing the necessary grouping action.

As can be seen more readily in Figure 2 (and also in Figures 3 to 7), the pusher element 14 faces the active branch 9a of the conveyor 9 in exactly the same position as the input end of the conveyor 7, though normally on the opposite side of the conveyor 9.

With specific reference to the attached drawings, the sideways movement of the pusher element 14 is generically realized in a transverse direction with respect to the active branch 9a of the conveyor 9 and between:
- a retracted position, in which it is detached from the active branch 9a and the articles A contained therein, shown by means of full lines in Figure 2 and Figures 3, 6 and 7, and
- a maximum forward position (complete expulsion of the articles A from the beds 12 of the active branch 9a) represented by means of broken lines in Figure 2 and also in Figure 5.

This movement, which of course also envisages a series of intermediate positions, the one shown in Figure 4 being a case in point, is realized under the action of a driving device 15 consisting, for example, of a mechanical pusher operated by, for example, an electric motor, preferably via a cam such as to ensure that the pushing action that the element 14 exerts on the articles A will be realized in a gradual and jerk-free manner, followed by a rapid return of the element 14 to its initial position as soon as the articles A have been expelled from the conveyor. Preferably, moreover, the element 14 is mounted on the driving device 15 in a detachable manner. This will make possible the selective mounting on the driving device of elements 14 of different widths and corresponding in each case to the space occupied by the group or pile P of articles A to be expelled.

Examination of Figures 3 to 7 clearly brings out a feature of the invention that proves to be particularly useful in making it possible for the device to be operated at high speeds, namely the fact that the operation of loading the articles A into the beds 12 (see, for example, Figures 5 - on the left - and 7) and the subsequent operation of discharging the articles A from the said beds 12 (see for example, Figures 4 and 5 - on the right) are realized in the same direction, that is to say, without inverting the direction of translation of the articles as happens in the case of the solution described in EP-A-0 501 382. It will also be noted that, operating in the manner illustrated in Figures 3 to 7, the articles A preserve their orientation wholly unchanged throughout the handling operations.

Furthermore, unlike what happens in the case of the conveyor 7, arranged in a position that is wholly fixed with respect to the structure 4, the conveyor 5 is mounted on the device 1 in such a manner as to be able to perform an ample traversing motion that will permit its downstream end (where downstream is used in its natural meaning to indicate the forward motion of the articles A) to follow the forward motion of the active branch 9a of the belt 9 acting as conveyor that transfers the articles A to the conveyor 7.

For the sake of simplicity one may here imagine that the return elements 16 (generally rollers) defining the upstream end of the conveyor 5 are mounted in a fixed position with respect to the base 4, while the corresponding elements on the downstream side, jointly indicated by the reference number 17 (it has here been assumed that the return of the downstream end of the belts of the conveyor 5 is realized by means of vertical-axis roller pairs, an arrangement that confers greater stability upon the terminal tracts of the active branches 5a) are mounted on a sliding trolley 18.

The trolley 18, preferably realized with material of low inertia (for example: a composite carbon fibre material) can move on a series of guides 19 that extend parallel to (and coextensive with) at least one appropriate tract of the active branch 9a of the belt 9. The movement of the trolley 18 is realized under the action of an appropriate driving device constituted, for example, by a linear motor 20 (which is shown explicitly only in Figure 2).

The rollers 17 (and therefore the downstream ends of the input conveyor 5) are thus in a position to perform a to and fro motion in a sideways direction, i.e. parallel to the active branch 9a of the belt 9, as indicated by the double-headed arrow in Figure 2 and inferable from the various positions of the trolley shown in Figures 3 to 7 . In the latter figures, moreover, the general traversing motion of the input conveyor 5 has been represented by a line consisting of dashes and dots. The centre of this traversing motion has been ideally indicated by the reference number 16, which in Figure 2 identifies the return elements that define the upstream end of the conveyor 5.

In this connection it will be appreciated that the conveyor 9 and the conveyor 5 are in actual practice kinematically uncoupled, i.e. independent of each other, this in the sense that their coordinated movement (in terms that will be explained in greater detail further on) is obtained by virtue of the coordinated control of their respective driving motors 13 and 20, which are in any case separate and distinct from each other. This represents another significant element of difference as compared with the solution described in EP-A-0 501 382, where the described oscillating conveyor is coupled (by means of the gearing of a sprocket wheel) with the principal conveyor of the device, so that in actual practice it is dragged along by the latter.

With a view to facilitating the insertion of the articles A into the beds 12, a roller or similar supporting element (not explicitly shown on the drawings, but to all intents and purposes capable of being identified with the roller 10 in the higher position in Figure 1) may be mounted on the trolley 18 for the purpose of maintaining in a slightly raised position the baffle of the tract of the branch 9a of the conveyor 9 at that moment facing the downstream end of the conveyor 5. The action of the element in question (which is mounted on the trolley 18 and therefore follows its traversing motion) has the effect of slightly spreading the baffles or fins 11 between which the article A at that moment fed onto the trolley 18 has to be inserted.

The operation of the three principal motor organs shown in Figure 2, namely:
- the motor 13 of the transfer conveyor 9,
- the driving device 15 that controls the movement of the pusher element 14, and
- the motor 20 that controls the movement of the trolley 18 on the guides 19, is controlled in an coordinated manner by a control unit 21 consisting of, for example, a so-called PLC (acronym of "programmable logic controller") or similar processing unit capable of synchronizing the movements of the various mobile elements and thus obtaining (in accordance with the so-called "electric axis" principle, for example) the desired functionalities.

The criteria for programming the operation of such a control unit in keeping with the motions that have to be executed have to be considered as being well known to any person appropriately skilled in programming the operation of automatic machinery. These criteria will not therefore be specifically discussed hereinbelow, not least because they are not in themselves relevant for the purposes of understanding the invention. This also applies as regards the control (normally coordinated by the same control unit 21) of the operation of the other motor units normally comprised in the device 1, which include, among others, the driving units of the bands or belts of the conveyors 5, 7 and 8. In this connection it will be sufficient to recall that the driving unit of the input conveyor 5 is operated in such a manner as to be synchronized with the input flow of the articles A, thereby ensuring a conveyor speed (at least) equal to the product of the length of each individual article A and the number of such articles arriving in unit time, though naturally taking due account of the preferable need for ensuring a certain spacing between successive articles. And, further, providing also the degree of synchronization with the driving units 13 and 20 required to ensure that each individual article A, after being transferred from the output end of the conveyor 5 to inside one of the receptacles 12, will properly aligned within this receptacle and not interfere with the fins or baffles 11. In fact, the seatings 12 for the articles A formed by the baffles 11 possess the general configuration of a channel and permit the incoming articles A to slide in a direction that is generically transverse with respect to the motion of the active branch 9a of the conveyor 9.

What has just been said applies particularly to the operating situations in which it becomes necessary to invert the direction of motion of the trolley 18. Even though this trolley is made of low-inertia material, the motion reversal process must necessarily take due account of inertia effects and provide appropriate deceleration, arrest and acceleration phases of the motion of the trolley 18, and this in such a manner as not to prejudice the necessary phasing with the movement of the active branch 9a of the conveyor 9.

The operation of the output conveyor, on the other hand, is related to the frequency with which the piles P are formed and therefore the number of articles A contained in each pile in such a manner as to enable the conveyor to accept the piles P at the moment when they are expelled from the transfer conveyor 9 as a result of the forward motion of the pusher element 14, and the conveyor 7 may therefore be operated either in an intermittent or - preferably - a continuous manner.

The criteria that regulate the coordinated operation of the conveyor 9 (forward motion of the active branch 9a ), the linear motor 20 which operates the trolley 18 and the pusher element 14 can be more readily understood by referring to the sequence of Figures 3 to 7.

With a view to fixing the idea, it has been supposed in all these figures that that articles A arriving on the input conveyor 5 are fed to the transfer conveyor 9 - one at a time - in the position of the active part 9a shown on the left-hand side of the figures. All this with a view to their eventual expulsion in groups (to simplify illustration, it has here been assumed that each group and therefore each pile P comprises six articles A, even though this number will be different in the preferred applications: for example, ten articles A) by the pusher element 14, which expels the groups of articles A in the position corresponding to the part of the active branch 9a shown on the right-hand side of the figures.

Likewise with a view to simplifying illustration, it has also been supposed (naturally on the assumption of representing the regular and continuous operation of the device 1) that the starting condition is the one shown in Figure 3. In this case the pusher element 14 is in its retracted position and in front of it, ready to be pushed onto the conveyor 7, there is a group of articles A (of which there are six in the simplified implementation example used for illustration purposes). Before the pusher element 14 can perform its pushing action (see the intermediate pusher position shown in Figure 4), it is essential that the active branch 9a, which in relation to the observer of Figures 3 to 7 moves from the left to the right, is brought "into a condition of substantial standstill", where this expression is to be understood as indicating arrest in the proper sense of the term and/or at least a considerable speed reduction (for example, a so-called "pendulation") in a condition very close to standstill.

The need for absorbing the flow of the articles A that keep arriving as input is satisfied by arranging matters in such a way that the trolley 18 carrying the downstream end 17 of the input conveyor 5 will at that moment find itself in a position close to the extreme forward limit of its traversing motion towards the pusher element 14 (that is to say, towards the output position represented by the conveyor 7). In these conditions, moving gradually away from the pusher element 14 and therefore also from the output conveyor 7 (see the position shown in Figure 4), the input conveyor 5 will be able to distribute the incoming articles A into the receptacles 12 of the active branch 9a available upstream of the output tract at that moment subjected to the expulsion action of the pusher element 14.

It will also be appreciated - as ideally indicated by the break line drawn across the active branch 9a in Figure 3 to 7 - it is not in any way necessary for the aforesaid action of absorbing the incoming flow of articles A to be performed by using the beds 12 immediately upstream of the beds 12 that contain the articles A to be expelled. It is quite obvious, in fact, that the zone in which the pusher element 14 is acting and the zone of action of the downstream end of the input conveyor 5 may be separated by a tract of the active branch 9a consisting of any number of beds 12 (though naturally already occupied by articles A). The presence of such an intermediate tract of the active branch 9a (and the corresponding articles A) will not have any effect whatsoever on the regular and continuous operation of the device 1, always provided, of course, that due account be taken of the presence of this intermediate tract when the device 1 is set in motion.

If we now return to the sequence of Figures 3 to 7, we may note that the pusher element 14, passing from the condition shown in Figure 4 to the position illustrated by Figure 5, completes the motion by which it expels the group of (six) articles A that are to form the pile P onto the conveyor 7. While it does so, the trolley 18 that carries the downstream end of the conveyor 5, continuing its backward motion along the guides 19, has arrived in a position close to the one in which it is furthest removed from the output position (pusher element 14 and output conveyor 7), performing also the action of loading an article A into the appropriate bed 12 of the active branch 9a (which at that moment is supposed to be substantially standing still).

At this point the driving device 15 is controlled by the unit 21 in such a way as to return to its rest position, while the motor 13 is set in motion again and thus causes the active branch 9a of the transfer belt 9 to move forward to the output position, that is to say, the region in which the pusher element 14 is operating.

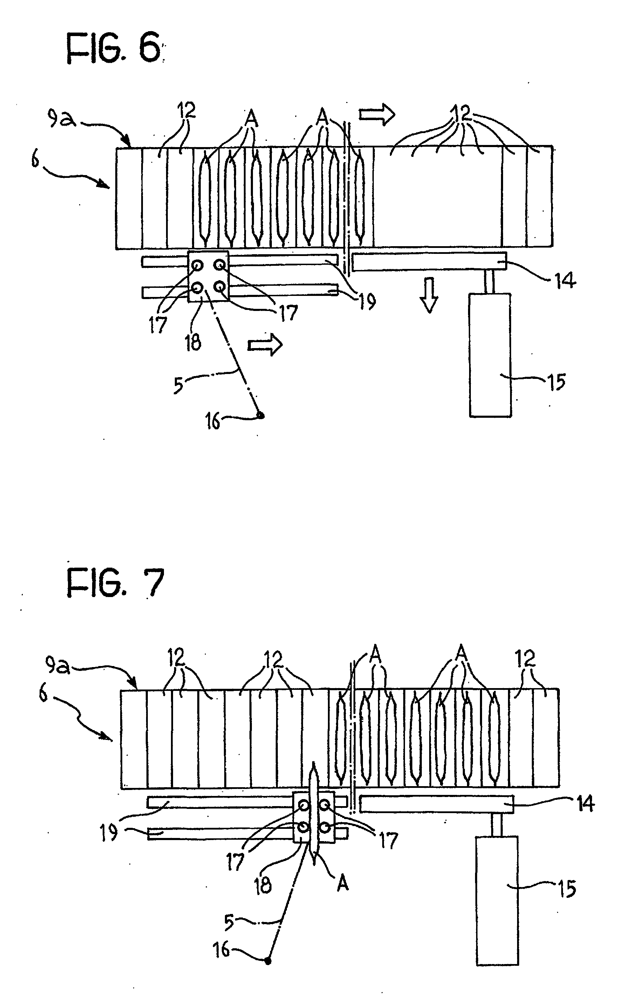

At this point, as soon as the trolley 18 has reached its maximum distance from the output position, the direction of rotation of the motor 20 is inverted, so that it will now also reverse the direction in which the trolley 18 moves along the guides 19 (see Figure 6). In these conditions the downstream end of the input conveyor 5 begins - as it were - to run after the active branch 9a as it moves forward, though with a certain predetermined lag, thus continuing to load the incoming articles A into the appropriate beds 12 of the transfer conveyor 9. It keeps doing this until it reaches the position shown in Figure 7, where a new group of articles A has reached the position in front of the pusher element 14 and is therefore ready for expulsion onto the output conveyor 7, while the trolley 18 carrying the downstream end of the input conveyor 5 is completing the operation of loading an article A into the appropriate receptacle 12 and is about to reach the forward limit of its travel as shown in Figure 3.

When it reaches this position, the operating cycle that has just been described is repeated in exactly the same way as before, commencing from the position shown in Figure 3.

It will in any case be appreciated that the kinematic separation that - in the previously described terms - exists between the transfer conveyor 9 and the input conveyor 5 makes it possible in actual practice for the latter, especially at its output end identified by the rollers 17 mounted on the trolley 18, to reach any relative position with respect to the beds 12 defined by adjacent pairs of baffles or fins 11. Put in other words, the output end of the conveyor 5 is capable of performing a relative movement with respect to the conveyor 9 that is continuous or substantially continuous and not subdivided into discrete steps corresponding, for example, to the dimensions of the beds 12.

This characteristic can be exploited - for example - for the purpose of enabling the device in accordance with the invention to function properly also when the articles to be handled are all made up of a plurality of individual products. For example, in the application context of a possible form of implementation of the invention to which reference has been made in the present exemplifying description, the articles that have to be stacked and compacted in the device 1 may each be made up of a stack of individual products, a case in point being such thin products as in current terminology are generally referred to as so-called "pantyliners".

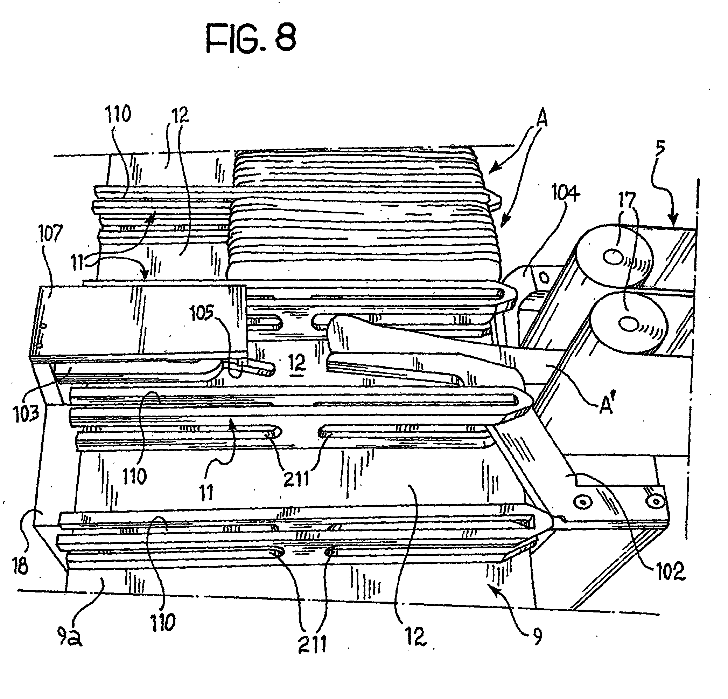

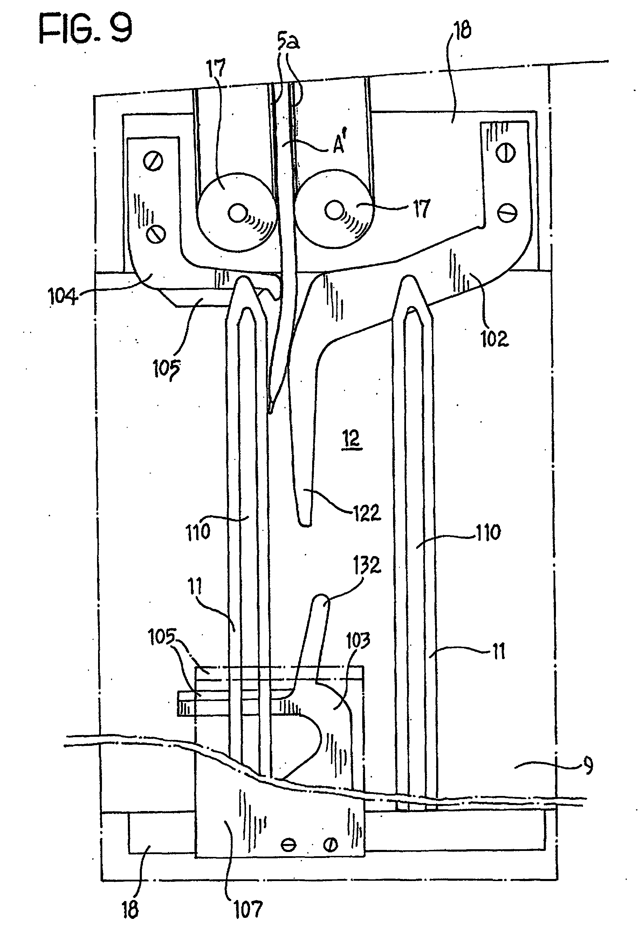

The corresponding development of the invention will now be described by specific reference to Figures 8 and 9 of the appended drawings. The first of these, Figure 8, may be considered as a view in the direction of the arrow VIII of Figure 1, while Figure 9 is essentially a plan view of the parts illustrated in Figure 8 as seen from above.

It should be made quite clear that a goodly part of the elements shown in Figures 8 and 9 (though with the exception, for example, of the previously described elements identified by the same reference numbers as appear in Figures 1 to 7) are not directly shown in the said Figures 1 to 7.
The reason for this is that Figures 8 and 9 are essentially intended to show how the structure of the previously described device 1 can be further developed to enable it to perform yet other operational functions.

A first such development concerns the possibility of realizing the baffles or fins 11 not as full laminar bodies (as illustrated, at least at the schematic level, in Figures 1 to 7), but as slotted elements that are provided with a longitudinal opening 110 that constitutes a furrow across each baffle 11 and - in its turn - is open at the end of the baffle 11 that faces the output conveyor 7 . In actual practice, each baffle 11 in this possible implementation variant consists not of a single lamellar formation, but rather of two such lamellar formations placed side by side and therefore separated by the said opening or slot 110 and joined to each other in the manner of a fork at the end facing away from the conveyor 7, that is to say, at the end facing the input conveyor 5.

In the said longitudinal openings or slots 110 of the baffles 11 it is possible to insert (by means of a sheet-feeding device not shown in the figure, but of a known type) such laminar elements as labels, instruction sheets, etc., of such conformation as to project vertically, at least in part, beyond the outline of the baffles 11 and therefore subject to the action of the pusher 14. In this way the said lamellar elements will be pushed out - together with the articles A - towards the conveyor 7, so that they will become incorporated in the stacks of articles that are formed from time to time. When operating in this manner, in particular, it is possible to insert in the baffle 11 a label corresponding to the article in question and intended to occupy a head or top-end position in a stack that is being formed, so that the said label will eventually be superposed on the stack in a terminal position. Such a label can also be placed at the tail or bottom-end position of the stack to either substitute or supplement the top-end label.

Again, the same mechanism can be used to insert in the openings 110 (especially when the articles A to be handled are in their turn made up of a stack of products, as will be explained in greater detail further on) retrieved products, which in this manner can be re-inserted in the flow of products that is being handled.

The reference numbers 102 , 103 , 104 and 107 in Figures 8 and 9 indicate the respective profiles (made of plastic material or of some other light material) mounted on the trolley 18 in such a manner as to be to all intents and purposes united with the rollers 17 in the general transverse movement of the output end of the conveyor 5 controlled by the motor 20. The profiles in question, especially when examined in the plan view of Figure 9, may seem such as to interfere with the baffles 11. In actual fact, however, when provision has to be made for the use of such profiles, the baffles 11 are designed with corresponding notches or cutouts 211 (which can be partly seen only in Figure 8) that can be crossed horizontally by the profiles 102 , 103 , 104, 107 which - carried by the trolley 18 arranged generically below the belt of the active branch 9a of the conveyor 9 - extend and act between the baffles 11 above the said belt.

The profiles 102 , 104 jointly define a kind of pincer-like structure, with each profile constituting one of the jaws of the pincers. This structure is mounted on the trolley 18 , by means of screwing, for example, in such a manner that the zone in which the two profiles move towards each other will in actual practice be aligned with the separation interval of the rollers 17. In this way the products A' (the reason for this different designation will become clearer further on) carried forward by the active branches 5a of the belts of the conveyor 5 come to insert themselves in the confluence space of the profiles 102 and 104 and subsequently move forward between the baffles 11 defining the bed 12 at that moment facing the conveyor 5. Preferably (as can be seen better in the plan view of Figure 9) the pincer-like structure defined by the profiles 102 and 104 should be at least slightly unsymmetrical as a result of the correspondingly unsymmetrical shape of the profiles 102 or 104 in the said area in which they come together and/or the presence on one of the profiles (the profile 102 in the example here illustrated) of an appendage 122 that prolongs the profile and extends it to well inside the bed 12 at that moment being fed with the products A'.

The aforesaid non-symmetry is intended to make sure that the products A' will be pushed into the bed 12 in such a way as to come to rest close to one of the baffles 11 that define the said bed. In the specific case of the observation point of Figure 9, the active branch 9a (and therefore the baffles 11) will move from right to left, so that the baffle 11 situated (always as seen from the observation point of Figure 9) on the left-hand side of each bed will be on the "downstream" side of the baffle situated on the right-hand side of the same bed. The term "downstream" (and the complementary "upstream") have of course, to be understood in relation to the direction in which the active branch 9a of the conveyor 9 is moving.

The said unsymmetry of the profiles 102, 104 is thus intended to ensure that the products A' will come to rest against the particular baffle 11 that from time to time comes to be situated in the position of the downstream side of the bed 12 in question.

The structure just described makes it possible for very thin products A' (the so-called "pantyliners", for example) to be fed to the device 1 in such a way as to ensure that, passing between the profiles 102 and 104, these products will gradually become stacked in a given bed 12 with the stacking direction extending from the downstream side to the upstream side (always with reference to the direction of movement of the active branch 9a of the conveyor 9) of that bed. In this way it is possible to form in each bed 12 an article A intended to be subsequently handled as previously described with reference to Figures 1 to 7, where the said article A is in actual fact made up of a stack of thin products A' that have been grouped into a single bed 12.

Naturally, the aforesaid stacking of the products A' within a single bed 12 presupposes that the output end of the conveyor 5 and the profiles 102 and 104 associated with it (and therefore also the trolley 18) will be capable of performing a backward movement with respect to the bed that is being filled, as we have seen, from the downstream side to the upstream side. It must here be underscored that this backward movement is relative, because in actual fact it must be capable of becoming superposed on a general forward movement of the output end of the conveyor 5 when the latter is obliged to follow the active branch 9a of the conveyor 9 in its forward movement towards the pusher element 14.

The said relative backward movement can be obtained by appropriately intervening (in accordance with criteria that are in themselves well known and do not therefore have to be specifically explained) in the control unit 21.

The other two profiles 103, 107 are in actual practice constituted by a stirrup shaped roughly in the manner of an "L" and a kind of roof or shelf mounted on the trolley 18 in such a manner as to project above the profile 103. The latter is provided with an appendage 132 that extends in substantial alignment with the appendage 122 of the profile 102. This in such a way as to form a kind of pocket into which the products A' become gradually inserted with their forward ends as the operation of stacking them in the bed 12 proceeds. In particular, the appendage 132, which gradually moves away from the baffle 11 against which the products A' are being stacked as a result of the aforesaid relative backward movement of the trolley 18, gradually comes to contain the products A' of the stack that is being formed until the moment when the bed 12 is substantially full. The profile 107, on the other hand, has the function of ensuring that the products A' will become inserted below it, thereby avoiding the possibility of their becoming jerked upwards and preserving the alignment of the products A'.

Wads 105 of spongy or, in any case, yielding material are arranged in various positions on the previously described profiles that are exposed to the movement and/or impact of the products A' in order to avoid the said products A' becoming deformed and/or jerked.

Of course, even though the solution is usually not particularly easy to realize (because it is intrinsically in conflict with the overall buffer function that the device 1 has to perform), there is nothing that prevents the function of stacking the products A' within the individual bed 12 being performed by acting against the baffle 11 situated on the position on the upstream side, i.e. imposing upon the trolley 18 a relative forward movement with respect to the active branch 9a of the conveyor 9. In that case the arrangement of the profiles 102, 103, 104 and 107 will be symmetrically reversed as compared with the one just described and illustrated by Figures 8 and 9.

Without prejudice to the principle of the invention, of course, the realization details and implementation forms may differ very widely from what has just been described and illustrated without in any way going beyond the ambit of the present invention as defined by the claims attached hereto. Without the list being in any way limitative, this is particularly true as regards:
- the specific realization modalities of the various motor-operated conveyors, including the input conveyor 5 and/or the output conveyors 7 and 8: these conveyors may be realized in forms other than the belt conveyors here described, preserving however itentical or equivalent operating characteristics, especially as regards the capacity of the downstream end of the input conveyor 5 to pursue the active branch 9a of the conveyor 9;
- the realization of the transfer conveyor 9: indeed, it is quite obvious that a function similar or equivalent to the one described hereinabove can be realized with a conveyor provided with receptacles and comprising a structure other than a belt or band structure and/or a structure developing in a vertical direction, conserving however the intrinsic advantages deriving from the fact that the conveyor 9 can be readily replaced by a conveyor having different dimensional characteristics for the purpose of realizing a so-called "format change", using an appropriate release device for example, without there being any need for substantial interventions in the other parts of the device, and the fact that the articles A are fed to the conveyor 9 and subsequently discharged therefrom by causing them to move in the same direction and/or without changing their orientation;
- the realization of the expulsion system comprising the pusher element 14; the latter is capable of being realized in an altogether different configuration. For example, by means of a rake structure with appropriate prongs, each intended to act on a particular article A; and/or
- the nature of the articles A, which may be of any kind whatsoever (and therefore constituted also by groups of products placed side by side in the manner better illustrated by reference to Figures 8 and 9), and also the possible orientation of these articles: in this connection it will be readily appreciated that the general vertical orientation and the generically flat conformation that have here been illustrated do not in any way constitute imperative or binding characteristics for the purpose of implementing the invention.

It will in any case be appreciated that the solution in accordance with the invention makes it possible to take account of the input flow rate in such a way as to optimize the accelerations and the speeds of the individual mobile elements. In particular, the choice (and the possibility) of moving the downstream end of the input conveyor 5 in a continuous or substantially continuous manner makes it possible to avoid intermittent movements of the transfer conveyor unit which is here represented by the belt conveyor 9, and thus avoiding also the consequential stressing of all the mechanical organs of the device, cause of a rapid deterioration of these parts. As regards the realization of the motor 20, it has been found that the use of a linear motor in place of, for example, a brushless motor implies the advantage that very high accelerations can be impressed upon the trolley 18.

The description given hereinabove brings out the fact that - in general terms - the relative enslavement of the conveyor 9 (active branch 9a) and the input conveyor 5 (traversing motion imposed by the trolley 18) follows the principle on the basis of which the branch 9a is enslaved to the trolley 18 in terms of speed, while the trolley 18, in its turn, is enslaved to the active branch 9a of the conveyor 9 in terms of position.

## Claims

1. A device for handling articles (A), including a transfer conveyor (9) with an active branch (9a) provided with seatings (12) for receiving the articles (A), said transfer conveyor (9) having associated with it first motor means (13) to impress upon the said active branch (9a) a forward movement between an input position (5) and an output position (7) for realizing the transfer of the articles (A) contained in the said seatings (12) from the said input position (5) to the said output position (7), the device (1) including loading means on the input side (5) capable of receiving a continuous flow of articles (A) and transferring the articles of the said input flow towards appropriate seatings (12) of the said active branch (9a) of the transfer conveyor; the said loading means on the input side (5) having associated with them second motor means (20) to move the said loading means on the input side (5) with respect to the said transfer conveyor (9) in such a way as to enable them to:
- follow the said active branch (9a) of the transfer conveyor (9) in said forward movement between the said input position (5) and the said output position (7), and
- selectively vary the length of the said active branch (9a) of the transfer conveyor (9) comprised between the said input position (5) and the said output position (7) and thus permit the articles (A) to accumulate on the said active branch (9a) of the transfer conveyor (9) while they are being transferred, wherein :
- there are provided control means (21) that act in a coordinated manner on the said first (13) and second (20) motor means to realize the said movement of following the active branch (9a) of the transfer conveyor (9) in the said forward movement between the said input position (5) and the said output position (7) to selectively vary the length of the said active branch (9a) of the transfer conveyor (9) comprised between the said input (5) and output (7) positions,
- the said loading means on the input side include a respective conveyor (5) with an upstream end (16) and a downstream end (17) in the direction of motion of the articles of the said input flow; the said upstream end (16) being mounted in a substantially fixed position, while the said downstream end (17) is associated with motor means (18, 20) capable of moving the said downstream end in a direction substantially coextensive with at least an appropriate branch of the said active branch (9a) of the transfer conveyor (9), and
- the said downstream end (17) has associated with it supporting equipment (18) capable of moving along guide formations (19) that run substantially parallel to at least an appropriate branch of the said active branch (9a) of the transfer conveyor,
**characterized in that**:
- the said transfer conveyor (9) and the said loading means on the input side (5) are kinematically uncoupled from each other; and
- the transfer conveyor (9) is provided with fin formations (11) that define the said reception seatings (12) and that the said mobile supporting equipment (18) is provided with an organ (10) capable of locally raising the tract of the active branch (9a) of the transfer conveyor (9) facing the said mobile equipment (18) to produce spreading of the fin formations (11) provided in the said tract of the active branch (9a).

2. A device in accordance with Claim 1, **characterized in that** it includes expulsion means (14) located at the said output position (7) and capable of acting simultaneous on a group of the said articles (A) contained in the said seatings (12) of the said active branch (9a) of the transfer conveyor (9) to expel the said group (P) of articles (A) from the transfer conveyor.

3. A device in accordance with Claim 2, **characterized in that** the said loading means on the input side (5) and the said expulsion means (14) are configured in such a way as to feed and expel the said articles (A) to and from, respectively, the said transfer conveyor (9) by always moving them in the same direction.

4. A device in accordance with Claim 2 or Claim 3, **characterized in that**:
- the said transfer conveyor (9), the said loading means on the input side (5) and the said expulsion means (14) each have associated with them respeotive driving means (13, 20, 15) and
- are provided with control means (21) capable of acting on the said several driving elements (13, 20, 15) to:
i) bring the said transfer conveyor (9) into a substantial standstill condition while the said expulsion means (14) expel from the transfer conveyor (9) a group of the said articles (A) and the said loading means on the input side (5) continue to transfer articles of the said input flow into the appropriate seatings (12) of the said active branch (9a) of the transfer conveyor (9) by moving along the said active branch (9a) away from the said output position (7) and thus to increase the length of the said active branch (9a) of the transfer conveyor (9) comprised between the said input (5) and the said output position (7);
ii) resume the forward movement of the said active branch (9a) of the transfer conveyor (9) after the said expulsion means(14) have expelled the said group of articles (A) from the transfer conveyor (9) and displace the said loading means on the input side (5) along the said active branch (9a) of the transfer conveyor (9) to approach the said output position (7) and thus following the forward movement of the said active branch (9a) of the transfer conveyor (9).

5. A device in accordance with Claim 1, **characterized in that** the said mobile supporting equipment (18) is made of low-inertia material.

6. A device in accordance with any one of Claims 1 to 5, **characterized in that** the said loading means on the input side (5) include a conveyor of the motor-operated belt type.

7. A device in accordance with any one of the previous claims, **characterized in that** the said loading means on the input side (5) have a linear motor (20) associated with them as the driving element.

8. A device in accordance with Claim 1, **characterized in that** it includes an associated output conveyor (7) situated in a fixed position with respect to the said transfer conveyor (9) and at the output end thereof.

9. A device in accordance with Claim 2, **characterized in that** at the said output position (7) it includes means for exerting a compacting action on the articles (A) comprised in the said group.

10. A device in accordance with Claim 8 and Claim 9, **characterized in that** the said output conveyor (7) is provided with conveyance formations (7a) that tend to converge in the flow direction of the said articles (A) , so that the said output conveyor (7) will realize the said action of compacting the articles (A) as they move forward on the said output conveyor (7).

11. A device in accordance with Claim 8 or Claim 10, **characterized in that** the said output conveyor (7) is a motor-operated conveyor of the belt type.

12. A device in accordance with any one of Claims 2 to 4, **characterized in that** the expulsion means (14) include a pusher element (14) capable (15) of performing a sideways motion in a direction that is generically transverse with respect to the said active branch (9a) of the transfer conveyor (9).

13. A device in accordance with any one of Claims 2, 3, 4 or 12, **characterized in that** the said transfer conveyor (9) is provided with fin formations (11) that jointly define the said reception seatings (12) for the said articles (A) and **in that** the said pusher element (14) is configured in such a way as to act on the articles (A) contained in the said reception seatings (12) in substantial absence of any interference with the said fin formation (11).

14. A device in accordance with any one of Claims 2, 3, 4, 12 or 13, **characterized in that** the said expulsion means (14) have associated with them an appropriate driving element (15) capable of impressing different speeds upon the said expulsion means (14) during the movement to expel the said group of articles from the transfer conveyor and also during the corresponding return movement.

15. A device in accordance with any one of the previous claims, **characterized in that** the said transfer conveyor (9) is a motor-operated ring conveyor (13) that envelops the associated revolving bodies (10).

16. A device in accordance with any one of the previous claims, **characterized in that** the said active branch (9a) of the transfer conveyor (9) is provided with reception seatings (12) for the articles (A) having the general configuration of a channel that permit the said articles (A) to slide in a direction that is generically transverse with respect to the said forward motion of the active branch (9a) of the transfer conveyor.

17. A device in accordance with Claim 1 and Claim 2, **characterized in that** the said finned formations (11) are provided with longitudinal openings (110) for receiving laminar elements to be inserted in the said groups of articles (A) by virtue of the action of the said expulsion means (14).

18. A device in accordance with any one of the preceding claims, **characterized in that**:
- the said motor means (20) can be operated by the said motor means in such a manner as to impress upon the said loading means on the input side (5) a scanning movement relative to the said active branch (9a) of the transfer conveyor such that the loading means (5) on the input side (5) become capable of performing a scanning movement relative to the said reception seatings (12) for the articles (A), and
- the said loading means on the input side (5) carry associated guide formations (102, 103, 104, 107) for sequentially feeding - due to the said relative scanning movement - into each of the said reception seatings (12) a plurality of products (A') that will jointly form an article (A) received in one of the said seatings (12).

19. A device in accordance with Claim 18, **characterized in that** the said guide formations have at least partly (102, 104) an unsymmetrical overall conformation, so that the said products (A') are inserted into the said reception seatings in such a way as to be arranged on one of the sides of the said reception seatings, with consequent stacking of the said sequentially fed products (A').

20. A device in accordance with Claim 19, **characterized in that**:
- the said relative scanning movement is realized in the direction opposite to the direction in which the said active branch (9a) of the transfer conveyor is moving forward, and
- the said guide formations (102, 104) steer the said products (A') towards the side of the said reception seatings (12) situated on the downstream side with respect to the forward movement of the said active branch (9a) of the transfer conveyor.

21. A device in accordance with any one of Claims 18 to 20, **characterized in that** the said guide formations include a pincer-like structure (102, 104) and the two jaws of the said structure guide the said products (A').

22. A device in accordance with Claim 19 and Claim 21, **characterized in that** one (102) of the jaws of the said pincer-like structure is provided with an appendage (122) that prolongs it and realizes the said unsymmetrical conformation.

23. A device in accordance with any one of Claims 18 to 22, **characterized in that** the said guide formations include at least one stirrup element (103, 132) that defines a pocket structure to receive the said products (A').

24. A device in accordance with Claim 21 and Claim 22, **characterized in that** the said stirrup element (103) has an appropriate appendage (132) that is substantially coextensive with and points in the direction of the said prolonging appendage (122).

25. A device in accordance with any one of Claims 18 to 24, **characterized in that** that at least some of the said guide formations (102, 103, 104, 107) have associated with them yielding elements (105) to deaden the movement of the said products (A').

## Patentansprüche

1. Vorrichtung zur Handhabung von Gegenständen (A), umfassend einen Umladeförderer (9) mit einem aktiven Abschnitt (9a), der mit Aufnahmen (12) zur Aufnahme der Gegenstände (A) versehen ist, wobei der Umladeförderer (9) mit einer ersten Motoreinrichtung (13) gekoppelt ist, um dem aktiven Abschnitt (9a) eine Vorwärtsbewegung zwischen einer Eingangsposition (5) und einer Ausgangsposition (7) zwecks Realisierung der Umladung der in den Aufnahmen (12) enthaltenen Gegenstände (A) von der Eingangsposition (5) zu der Ausgangsposition (7) aufzuprägen, wobei die Vorrichtung (1) eine Ladeeinrichtung auf der Eingangsseite (5) umfaßt, die für die Aufnahme eines kontinuierlichen Stroms von Gegenständen (A) und für das Übertragen der Gegenstände des Eingangsstroms in Richtung auf die entsprechenden Aufnahmen (12) des aktiven Abschnitts (9a) des Umladeförderers geeignet ist; die Ladeeinrichtung auf der Eingangsseite (5) ist mit einer zweiten Motoreinrichtung (20) gekoppelt, um die Ladeeinrichtung auf der Eingangsseite (5) in Bezug auf den Umladeförderer (9) in der Weise zu bewegen, um zu ermöglichen:
- daß der aktive Abschnitt (9a) des Umladeförderers in der Vorwärtsbewegung zwischen der Eingangsposition (5) und der Ausgangsposition (7) folgt und
- daß selektiv die Länge des aktiven Abschnitts (9a) des Umladeförderers (9) zwischen der Eingangsposition (5) und der Ausgangsposition (7) variiert und damit den Gegenständen (A) erlaubt, sich in dem aktiven Abschnitt (9a) des Umladeförderers (9) zu sammeln, während sie umgeladen werden, wobei:
- eine Steuereinrichtung vorgesehen ist, die in abgestimmter Weise auf die erste Motoreinrichtung (13) und die zweite Motoreinrichtung (20) einwirkt, damit die Bewegung verwirklicht wird, um dem aktiven Abschnitt (9a) des Umladeförderers (9) in der Vorwärtsbewegung zwischen der Eingangsposition (5) und der Ausgangsposition (7) so zu folgen, daß selektiv die Länge des aktiven Abschnitts (9a) des Umladeförderers (9) zwischen der Eingangsposition (5) und der Ausgangsposition (7) variiert;
- die Ladeeinrichtung auf der Eingangsseite einen einzelnen Förderer (5) mit einem stromaufwärtigen Ende (16) und einem stromabwärtigen Ende (17) in der Bewegungsrichtung der Gegenstände des Eingangsstroms aufweist; wobei das stromaufwärtige Ende (16) in einer im wesentlichen festen Position angebracht ist, während das stromabwärtige Ende (17) mit den Motoreinrichtungen (18, 20) so gekoppelt ist, daß es für die Bewegung des stromabwärtigen Endes in einer Richtung geeignet ist, die im wesentlichen zusammenfällt mit zumindest einem geeigneten Abschnitt des aktiven Abschnitts (9a) des Umladeförderers (9), und
- das stromabwärtige Ende (17) mit einer Trägereinrichtung (18) gekoppelt ist, das für eine Bewegung entlang Führungseinrichtungen (19) geeignet ist, die sich im wesentlichen parallel zumindest zu einem entsprechenden Abschnitt des aktiven Abschnitts (9a) des Umladeförderers erstrecken,
**dadurch gekennzeichnet, daß**:
- daß der Umladeförderer (9) und die Ladeeinrichtung auf der Eingangsseite (5) kinematisch nicht miteinander gekuppelt sind; und
- der Umladeförderer (9) mit Leitflächen (11) versehen ist, die die Aufnahmen (12) bilden, und daß die bewegliche Trägerelement (18) mit einem Organ (10) versehen ist, das zum lokalen Anheben eines Teils des aktiven Abschnittes (9a) des Umladeförderers (9) geeignet ist, welches dem beweglichen Element (18) gegenüberliegt, um ein Spreizen der Leiflächen (11) zu bewirken, die sich in diesem Teil des aktiven Abschnitts (9a) befinden.

2. Vorrichtung nach Anspruch 1, **dadurch gekennzeichnet, daß** sie eine Austreibeinrichtung aufweist, die in der Ausgangsposition (7) angeordnet sowie geeignet ist, gleichzeitig auf eine Gruppe der Gegenstände (A), die in den Aufnahmen (12) des aktiven Abschnitts (9a) des Umladeförderers (9) sitzen, so einzuwirken, daß die Gruppe (P) von Gegenständen (A) aus dem Umladeförderer ausgestoßen wird.

3. Vorrichtung nach Anspruch 2, **dadurch gekennzeichnet, daß** die Ladeeinrichtung auf der Eingangsseite (5) und die Austreibeinrichtung (14) derart konfiguriert sind, daß die Gegenstände (A) dem ümladeförderer (9) jeweils zugeführt und aus diesem ausgetrieben werden durch stetige Bewegung in der gleichen Richtung.

4. Vorrichtung nach Anspruch 2 oder 3, **dadurch gekennzeichnet, daß**
- der Umladeförderer (9), die Ladeeinrichtung auf der Eingangsseite (5) und die Austreibeinrichtung (14) mit jeweils einer Antriebseinrichtung (13, 20, 15) gekoppelt sind und
- mit einer Steuereinrichtung (21) versehen sind, die geeignet ist, auf die diversen Antriebseinrichtungen (13, 20, 15) einzuwirken, um:
(i) den Umladeförderer in einen im wesentlichen stillstehenden Zustand zu versetzen, während die Austreibeinrichtung (14) eine Gruppe von Gegenständen (A) aus dem Umladeförderer (9) ausstößt und die Ladeeinrichtung auf der Eingangsseite (5) fortfährt, Gegenstände des Eingangsstroms in die entsprechenden Aufnahmen (12) des aktiven Abschnitts (9) des Umladeförderers (9) durch Bewegen entlang dem aktiven Abschnitt (9a) von der Ausgangsposition (7) weg zu übertragen und damit die Länge des aktiven Abschnitts (9a) des Umladeförderers (9) zwischen der Eingangsposition (5) und der Ausgangsposition (7) zu vergrößern;
(ii) die Vorwärtsbewegung des aktiven Abschnitts (9a) des Umladeförderers (9) wieder aufzunehmen, nachdem die Austreibeinrichtung (14) die Gruppe von Gegenständen (A) aus dem Umladeförderer (9) ausgestoßen hat, und die Ladeeinrichtung auf der Eingangsseite entlang des aktiven Abschnitts (9a) des Umladeförderers (9) so zu verlagern, daß sie sich der Ausgangsposition (7) annähert und damit der Vorwärtsbewegung des aktiven Abschnitts (9a) des Umladeförderers (9) folgt.

5. Vorrichtung nach Anspruch 1, **dadurch gekennzeichnet, daß** die mobile Trägereinrichtung (18) aus einem Material mit niedriger Trägheit besteht.

6. Vorrichtung nach einem der Ansprüche 1 bis 5, **dadurch gekennzeichnet, daß** die Ladeeinrichtung auf der Eingangsseite (5) einen Förderer des motorisch angetriebenen Laufbandtyps aufweist.

7. Vorrichtung nach einem der vorheriqen Ansprüche, **dadurch gekennzeichnet, daß** die Ladeeinrichtung auf der Eingangsseite (5) einen Linearmotor (20) aufweist, der mit dem Antriebselement gekoppelt ist.

8. Vorrichtung nach Anspruch 1, **dadurch gekennzeichnet, daß** sie einen zugehörigen Ausgangsförderer (7) einschließt, der in einer festen Position in Bezug auf den Umladeförderer (9) und an dessen Ausgangsende angeordnet ist.

9. Vorrichtung nach Anspruch 2, **dadurch gekennzeichnet, daß** die Ausgangsposition (7) eine Einrichtung zum Ausüben einer Kompaktierungseiawirkung auf die in der Gruppe enthaltenen Gegenstände (A) aufweist.

10. Vorrichtung nach Anspruch 8 und 9, **dadurch gekennzeichnet, daß** der Ausgangsförderer (7) mit Förderelementen (7a) versehen ist, die bestrebt sind, sich in Transportrichtung der Gegenstände (A) einander anzunähern, so daß der Ausgangsförderer (7) die Kompaktierungseinwirkung auf die Gegenstände (A) bewirkt, wenn sie in dem Ausgangsförderer (7) vorwärtsbewegt werden.

11. Vorrichtung nach Anspruch 8 oder 10, **dadurch gekennzeichnet, daß** die Ausgangsförderer (7) ein motorisch angetriebener Förderer des Laufbandtyps ist.

12. Vorrichtung nach einem der Ansprüche 2 bis 4, **dadurch gekennzeichnet, daß** die Austreibeinrichtung (14) ein Ausstoßelement (14) aufweist, das in der Lage ist (15), eine seitliche Bewegung in einer Richtung auszuführen, die im wesentlichen quer zu dem aktiven Abschnitt (9a) des Umladeförderers (9) ist.

13. Vorrichtung nach einem der Ansprüche 2, 3, 4 oder 12, **dadurch gekennzeichnet, daß** der Umladeförderer (9) mit Leitflächen (11) versehen ist, die gemeinsam die Aufnahmen (12) für die Gegenstände (A) definieren, und daß das Ausstoßelement (14) so ausgebildet ist, daß es auf die Gegenstände (A) in den Aufnahmen (12) einwirkt, ohne im wesentlichen an die Leitflächen (11) anzustoßen.

14. Vorrichtung nach. einem der Ansprüche 2, 3, 4, 12 oder 13, **dadurch gekennzeichnet, daß** das Ausstoßelement (14) mit einem Antriebselement (15) gekoppelt ist, das in der Lage ist, dem Ausstoßelement (14) während der Bewegung zum Ausstoßen der Gruppe von Gegenständen aus dem Umladeförderer und auch während der entsprechenden Rücklaufbewegung verschiedene Geschwindigkeiten aufzuprägen.

15. Vorrichtung nach einem der vorhergehenden Ansprüche, **dadurch gekennzeichnet, daß** der Umladeförderer (9) ein motorisch angetriebener Umlaufförderer (13) ist, der die zugehörigen Umlaufkörper (10) einhüllt.

16. Vorrichtung nach einem der vorhergehenden Ansprüche, **dadurch gekennzeichnet, daß** der aktive Abschnitt (9a) des Umladeförderers (9) mit Aufnahmen für die Gegenstände (A) versehen ist, die die allgemeine Formgebung eines Kanals haben, der den Gegenständen (A) erlaubt, in eine Richtung zu gleiten, die im wesentlichen quer zu der Vorwärtsbewegung des aktiven Abschnitts (9a) des Umladeförderers ist.

17. Vorrichtung nach Anspruch 1 und 2, **dadurch gekennzeichnet, daß** die Leitflächen (11) mit länglichen Öffnungen (110) zur Aufnahme lamellenförmiger Elemente versehen sind, die in die Gruppen von Gegenständen (A) aufgrund der Einwirkung des Ausstoßelements (14) eingeführt werden sollen.

18. Vorrichtung nach einem der vorhergehenden Ansprüche, **dadurch gekennzeichnet, daß**:
- die Antriebseinrichtung (20) durch die Motoreinrichtung derart betrieben werden können, daß der Ladeinrichtung auf der Eingangsseite (5) eine Abtastbewegung relativ zu dem aktiven Abschnitt (9a) des Umladeförderers aufgeprägt ist, so daß die Ladeeinrichtung (5) auf der Eingangsseite (5) in die Lage versetzt wird, eine Abtastbewegung relativ zu den Aufnahmen (12) für die Gegenstände (A) auszuführen, und
- die Ladeeinrichtung auf der Eingangsseite (5) zugehörige Führungseinrichtungen (102, 103, 104, 107) für die sequentielle Zuführung einer Vielzahl von Produkten (A') in jede der Aufnahmen (12) - in Abhängigkeit zu der jeweiligen Abtastbewegung - trägt, wobei die Produkte (A') zusammengenommen einen Gegenstand (A) bildet, der in eine der Aufnahmen (12) aufgenommen ist.

19. Vorrichtung nach Anspruch 18, **dadurch gekennzeichnet, daß** die Führungseinrichtungen zumindest teilweise (102, 104) eine solch unsymmetrische Insgesamtgestaltung haben, daß die Produkte (A') in die Aufnahmen derart eingeführt werden, daß sie auf einer Seite der Aufnahmen unter fortlaufender Stapelung der sequentiell zugeführten Produkte (A') angeordnet werden.

20. Vorrichtung nach Anspruch 19, **dadurch gekennzeichnet, daß**:
- die Abtastbewegung in der Richtung ausgeführt wird, die entgegengesetzt der Richtung ist, in der sich der aktive Abschnitt (9a) des Umladeförderers vorwärts bewegt, und
- die Führungseinrichtungen (102, 104) die Produkte (A') in Richtung auf diejenige Seite der Aufnahmen (12) lenkt, die auf der Stromabwärtsseite in Bezug auf die Vorwärtsbewegung des aktiven Abschnitts (9a) des Umladeförderers liegt.

21. Vorrichtung nach einem der Ansprüche 18 bis 20, **dadurch gekennzeichnet, daß** die Führungseinrichtungen eine zangenartige Struktur (102, 104) aufweisen und die beiden Backen der Struktur die Produkte (A') führen.

22. Vorrichtung nach Anspruch 19 und 21, **dadurch gekennzeichnet, daß** eine (102) der Backen der zangenartigen Struktur mit einem Fortsatz (122) ) versehen ist, der sie verlängert und die unsymmetrische Gestaltung bestimmt.

23. Vorrichtung nach einem der Ansprüche 18 bis 22, **dadurch gekennzeichnet, daß** die Führungseinrichtungen zumindest ein Bügelelement (102, 132) aufweisen, das eine Taschenstruktur zur Aufnahme der Produkte (A') ausbildet.

24. Vorrichtung nach Anspruch 21 und 22, **dadurch gekennzeichnet, daß** das Bügelelement (103) einen geeigneten Fortsatz (132) aufweist, der sich im wesentlichen in gleicher Richtung erstreckt wie der verlängernde Fortsatz (122) und in dessen Richtung zeigt.

25. Vorrichtung nach einem der Ansprüche 18 bis 24, **dadurch gekennzeichnet, daß** zumindest einige der Führungseinrichtungen (102, 103, 104, 107) nachgiebige Elemente (105) aufweisen, um die Bewegung der Gegenstände (A') zu bremsen.

## Revendications

1. Dispositif pour manipuler des objets (A) comprenant un convoyeur de transfert (9) équipé d'une dérivation active (9a) munie de sièges (12) pour recevoir les objets (A), ledit convoyeur de transfert (9) étant associé à un premier moteur (13) pour conférer à ladite dérivation active (9a) un mouvement vers l'avant entre une position d'entrée (5) et une position de sortie (7) afin de réaliser le transfert des objets (A) contenus dans lesdits sièges (12) depuis ladite position d'entrée (5) vers ladite position de sortie (7), le dispositif (1) comprenant des moyens de chargement sur le côté d'entrée (5) aptes à recevoir un flot continu d'objets (A) et à recevoir les objets dudit flot d'entrée vers des sièges appropriés (12) de ladite dérivation active (9a) du convoyeur de transfert ; lesdits moyens de chargement sur le côté d'entrée (5) étant associés à un second moteur (20) pour déplacer lesdits moyens de chargement sur le côté d'entrée (() par rapport audit convoyeur de transfert (9) de manière à leur permettre de :
- suivre ladite dérivation active (9a) du convoyeur de transfert (9) dans ledit mouvement vers l'avant entre ladite position d'entrée (5) et ladite position de sortie (7), et
- modifier sélectivement la longueur de ladite dérivation active (9a) du convoyeur de transfert (9) comprise entre ladite position d'entrée (5) et ladite position de sortie (7) et ainsi permettre aux objets (A) de s'accumuler sur ladite dérivation active (9a) du convoyeur de transfert (9) tout en étant transférés, dans lequel :
- des moyens de commande (21) sont prévus qui agissent d'une manière coordonnée sur lesdits premier (13) et second (20) moteurs pour réaliser ledit mouvement de suivi de la dérivation active (9a) du convoyeur de transfert (9) dans ledit mouvement vers l'avant entre ladite position d'entrée (5) et ladite position de sortie (7) pour modifier sélectivement la longueur de ladite dérivation active (9a) du convoyeur de transfert (9) comprise entre lesdites positions d'entrée (5) et de sortie (7)
- lesdits moyens de chargement sur le côté entrée comprennent un convoyeur respectif (5) avec une extrémité amont (16) et une extrémité aval (17) dans le sens de déplacement des objets dudit flot d'entrée ; ladite extrémité amont (16) étant montée dans une position sensiblement fixe, tandis que ladite extrémité aval (17) est associée à des moteurs (13, 20) aptes à déplacer ladite extrémité aval dans une direction sensiblement de même étendue avec au moins une dérivation appropriée de ladite dérivation active (9a) du convoyeur de transfert (9), et
- ladite extrémité aval (17) étant associée à un équipement support (18) apte à se déplacer le long de formations de guidage (19) qui s'étendent sensiblement parallèles à au moins une dérivation appropriée de ladite dérivation active (9a) du convoyeur de transfert,
**caractérisé en ce que** :
- ledit convoyeur de transfert (9) et lesdits moyens de chargement sur le côté d'entrée (5) sont cinématiquement découplés l'un de l'autre ; et
- le convoyeur de transfert (9) est muni de formations en ailettes (11) qui définissent lesdits sièges de réception (12) et **en ce que** ledit équipement support mobile (18) est muni d'un organe (10) apte à soulever localement la partie de la dérivation active (9a) du convoyeur de transfert (9) tournée vers ledit équipement mobile (18) pour provoquer un étalement des formations en ailettes (11) prévues dans ladite partie de la dérivation active (9a).

2. Dispositif selon la revendication 1, **caractérisé en ce qu'**il comprend des moyens d'éjection (14) situés à ladite position de sortie (7) et aptes à agir simultanément sur un groupe desdits objets (A) se trouvant dans lesdits sièges (12) de ladite dérivation active (9a) du convoyeur de transfert (9) pour éjecter ledit groupe (P) d'objets (A) du convoyeur de transfert.

3. Dispositif selon la revendication 2, **caractérisé en ce que** lesdits moyens de chargement sur le côté d'entrée (5) et lesdits moyens d'éjection (14) sont configurés de manière à délivrer et à éjecter lesdits objets (A) à et dudit convoyeur de transfert (9), respectivement, en les déplaçant toujours dans la même direction.

4. Dispositif selon la revendication 2 ou la revendication 3, **caractérisé en ce que** :
- ledit convoyeur de transfert (9), lesdits moyens de chargement sur le côté d'entrée (5) et lesdits moyens d'éjection (14) sont associés chacun à des moyens d'entraînement respectifs (13, 20, 15) et
- Sont munis de moyens de commande (21) aptes à agir sur lesdits éléments d'entraînement respectifs (13, 20, 15) pour :
i) amener ledit convoyeur de transfert (9) dans une position sensiblement d'arrêt tandis que lesdits moyens d'éjection (14) éjectent du convoyeur de transfert (9) un groupe desdits objets (A) et lesdits moyens de chargement sur le côté d'entrée (5) continuent à transférer des objets dudit flot d'entrée dans les sièges appropriés (12) de ladite dérivation active (9a) du convoyeur de transfert (9) en s'écartant le long de ladite dérivation active (9a) de ladite position de sortie (7) et ainsi augmenter la longueur de ladite dérivation active (9a) du convoyeur de transfert (9) comprise entre ladite position d'entrée (5) et ladite position de sortie (7) ;
ii) reprendre le mouvement vers l'avant de ladite dérivation active (9a) du convoyeur de transfert (9) après que lesdits moyens d'éjection (14) ont éjecté ledit groupe d'objets (A) du convoyeur de transfert (9) et déplacer lesdits moyens de chargement sur le côté d'entrée (5) le long de ladite dérivation active (9a) du convoyeur de transfert (9) pour approcher ladite position de sortie (è) et ainsi en suivant le mouvement vers l'avant de ladite dérivation active (9a) du convoyeur de transfert (9).

5. Dispositif selon la revendication 1, **caractérisé en ce que** ledit équipement support mobile (18) est réalisé en matériau à faible inertie.

6. Dispositif selon l'une quelconque des revendications 1 à 5, **caractérisé en ce que** lesdits moyens de chargement sur le côté d'entrée (5) comprennent un convoyeur du type à courroie actionné par moteur.

7. Dispositif selon l'une quelconque des revendications précédentes, **caractérisé en ce que** lesdits moyens de chargement sur le côté d'entrée (5) possèdent un moteur linéaire (20) qui lui est associé en tant qu'élément d'entraînement.

8. Dispositif selon la revendication 1, **caractérisé en ce qu'**il comprend un convoyeur de sortie associé (7) situé dans une position fixe par rapport audit convoyeur de transfert (9) et à l'extrémité de sortie de celui-ci.

9. Dispositif selon la revendication 2, **caractérisé en ce qu'**à ladite position de sortie (78) il comprend des moyens pour exercer une action de tassement sur les objets (A) compris dans ledit groupe.

10. Dispositif selon la revendication 8 et la revendication 9, **caractérisé en ce que** ledit convoyeur de sortie (7) est muni de formations d'acheminement (7a) qui tendent à converger dans le sens d'écoulement desdits objets (A), de sorte que ledit convoyeur de sortie (7) réalisera ladite action de tassement des objets (A) lorsqu'ils se déplacent vers l'avant sur ledit convoyeur de sortie (7).

11. Dispositif selon la revendication 8 ou la revendication 10, **caractérisé en ce que** ledit convoyeur de sortie (7) est un convoyeur actionné par moteur du type à courroie.

12. Dispositif selon l'une quelconque des revendications 2 à 4, **caractérisé en ce que** les moyens d'éjection (14) comprennent un élément poussoir (14) apte (15) à accomplir un mouvement latéral dans une direction généralement transversale par rapport à ladite dérivation active (9a) du convoyeur de transfert (9).

13. Dispositif selon l'une quelconque des revendications 2, 3, 4 ou 12, **caractérisé en ce que** ledit convoyeur de transfert (9) est équipé de formations en ailettes (11) qui définissent conjointement lesdits sièges de réception (12) pour lesdits objets (A) et **en ce que** ledit élément poussoir (14) est configuré de manière à agir sur les objets (A) contenus dans lesdits sièges de réception (12) sensiblement en l'absence d'interférences avec ladite formation en ailettes (11).

14. Dispositif selon l'une quelconque des revendications 2, 3, 4, 12 ou 13, **caractérisé en ce que** lesdits moyens d'éjection (14) sont associés à un élément d'entraînement approprié (15) apte à conférer des vitesses différentes auxdits moyens d'éjection (14) durant le mouvement d'éjection dudit groupe d'objets du convoyeur de transfert et également durant le mouvement de retour correspondant.

15. Dispositif selon l'une quelconque des revendications précédentes, **caractérisé en ce que** ledit convoyeur de transfert (9) est un convoyeur annulaire mû par moteur (13) qui enveloppe les éléments rotatifs associés (10).

16. Dispositif selon l'une quelconque des revendications précédentes, **caractérisé en ce que** ladite dérivation active (9a) du convoyeur de transfert (9) est munie de sièges de réception (12) pour les objets (A) ayant la configuration générale d'un canal qui permette auxdits objets (A) de glisser dans une direction généralement transversale par rapport audit mouvement vers l'avant de la dérivation active (9a) du convoyeur de transfert.

17. Dispositif selon la revendication 1 et la revendication 2, **caractérisé en ce que** lesdites formations en ailettes (11) sont munies d'ouvertures longitudinales (110) pour recevoir des éléments laminaires à introduire dans lesdits groupes d'objets (A) en vertu de l'action desdits moyens d'éjection (14).

18. Dispositif selon l'une quelconque des revendications précédentes, **caractérisé en ce que** :
- ledit moteur (20) peut actionné de manière à imprimer auxdits moyens de chargement sur le côté d'entrée (5) un mouvement de balayage par rapport à ladite dérivation active (9a) du convoyeur de transfert de telle sorte que les moyens de chargement (5) sur le côté d'entrée (5) deviennent capables d'effectuer un mouvement de balayage par rapport auxdits sièges de réception (12) pour les objets (A), et
- lesdits moyens de chargement sur le côté d'entrée (5) portent des formations de guidage associées (102, 103, 104, 107) pour délivrer séquentiellement par suite dudit mouvement de balayage relatif, dans chacun desdits sièges de réception (12) une pluralité de produits (A') qui formeront conjointement un objet (A) reçu dans un desdits sièges (12).

19. Dispositif selon la revendication 18, **caractérisé en ce que** lesdites formations de guidage ont au moins partiellement (102, 104) une conformation qlobale asymétrique, de sorte que lesdits produits (A') sont introduits dans lesdits sièges de réception de manière à être disposés sur un des côtés desdits sièges de réception, avec un empilage ultérieur desdits produits séquentiellement délivrés (A').

20. Dispositif selon la revendication 19, **caractérisé en ce que** :
- ledit mouvement de balayage relatif est réalisé dans la direction opposée à la direction dans laquelle progresse ladite dérivation active (9a) du convoyeur de transfert, et
- lesdites formations de guidage (102, 104) dirigent lesdits produits (A') vers le côté desdits sièges de réception (12) situés sur le côté aval par rapport au mouvement vers l'avant de ladite dérivation active (9a) du convoyeur de transfert.

21. Dispositif selon l'une quelconque des revendications 18 à 20, **caractérisé en ce que** lesdites formations de guidage comprennent une structure en forme de pince (102, 104) et les deux mâchoires de ladite structure guident lesdits produits (A').

22. Dispositif selon la revendication 19 et la revendication 21, **caractérisé en ce qu'**une (102) des mâchoires de ladite structure en forme de pince est munie d'un accessoire (122) qui la prolonge et réalise ladite conformation asymétrique.

23. Dispositif selon l'une quelconque des revendications 18 à 22, **caractérisé en ce que** lesdites formations de guidage comprennent au moins un élément de brassage (103, 132) qui définit une structure de poche pour recevoir lesdits produits (A').

24. Dispositif selon la revendication 21 et la revendication 22, **caractérisé en ce que** ledit élément de brassage (103) possède un accessoire approprié (132) qui est sensiblement de même étendue et est dirigé dans la direction dudit accessoire de prolongement (122).

25. Dispositif selon l'une quelconque des revendications 18 à 24, **caractérisé en ce qu'**au moins certaines desdites formations de guidage (102, 103, 104, 107) sont associées à des éléments élastiques (105) pour amortir le mouvement desdits produits (A').
